# DEMANDE DE BREVET EUROPEEN

(11) **EP 0 612 676 A1**
(43) Date de publication de la demande: **31.08.1994**
(21) Numéro de dépôt: 94420064.1
(22) Date de dépôt: 21.02.1994
(51) Int. Cl.: B65G 47/90, B65H 3/22

(54) **Dispositif pour la préhension d'une pièce mince et souple, telle qu'une pièce textile, son extraction hors d'un lot ou tas de telles pièces et sa dépose ultérieure**

(30) Priorité: 22.02.1993 FR 9302289
(71) Demandeur: SOCIETE JEAN MICHEL, F-73100 GRESY SUR AIX (FR)
(72) Inventeur: Legrand, Guy, F-07130 Saint Peray (FR); Cinato, Pascal, F-69250 Albigny sur Saone (FR); Tournassat, Luc, F-73420 Drumettaz Clarafond (FR); Baboz, Michel, F-73100 Brison St Innocent (FR)
(74) Mandataire: Maureau, Philippe

(57) **Abrégé**

Ce dispositif est du type supporté par un chariot (13), mobile au moins verticalement et comportant une pince mécanique (3, 6) et des moyens aptes à saisir une pièce (17) du lot ou tas et à la présenter entre les mâchoires (3, 6) de la pince.

Ces moyens sont constitués par un organe en forme de vrille (19), disposé verticalement et animé, d'une part, d'un mouvement descendant entre les mâchoires (3, 6) en position ouverte de la pince depuis une position fin de course haute, jusqu'à une position fin de course basse, suivi d'un mouvement ascendant de retour en position haute et, d'autre part, d'une rotation dans le sens du vissage, en fin de course descendante, suivie d'une rotation en sens inverse, en fin de course ascendante, simultanément à la fermeture de la pince.

## Description

La présente invention concerne un dispositif pour la préhension d'une pièce mince et souple, telle qu'une pièce textile comme un drap, son extraction hors d'un lot ou tas de telles pièces et sa dépose ultérieure. Ce dispositif est plus particulièrement destiné, quoique non exclusivement, à une installation telle que celle connue par le document FR-A-92 13282.

Dans cette installation, à l'entrée de laquelle les pièces sont présentées mélangées et imbriquées les unes dans les autres en formant des lots, ces pièces doivent être extraites l'une après l'autre pour être présentées individuellement aux postes successifs de l'installation.

En outre, la saisie mécanisée d'un drap et son extraction hors du tas sont des opérations problématiques puisque devant se réaliser à une cadence rapide, allant de 150 à 1500 draps à l'heure et de manière fiable, c'est-à-dire en ne saisissant qu'un seul drap à la fois et en le saisissant avec suffisamment de force pour l'extraire du tas, les draps mouillés pesant chacun entre un kilogramme et un kilo et demi.

Il a déjà été proposé, par les brevets français n° 86 13866 et n° 87 11043, un appareil de saisie de pièces souples comprenant un soufflet élastique dont une extrémité est ouverte et dont l'autre est raccordée à l'extrémité d'un tube d'aspiration, le tube étant destiné à créer une dépression dans le soufflet lorsque son extrémité ouverte est amenée au contact de l'une des pièces d'un lot, ce qui provoque la contraction du soufflet jusqu'à ce que la pièce vienne au contact de l'ouverture du tube, qui la retient.

Cet appareil présente l'inconvénient de nécessiter une force d'aspiration très importante pour pouvoir saisir la pièce avec une force de retenue suffisante pour son extraction correcte. Selon la conformation du lot de pièces, cette force est soit insuffisante pour réaliser l'extraction, soit fréquemment, trop importante, ce qui entraîne la saisie de plusieurs pièces en même temps. De plus, certaines conformations de la surface de lots de pièces à l'endroit où le tube agit rendent la préhension inefficace, en particulier, dans le cas où cet endroit possède une forme concave, est en pente ou présente des plis.

Par le brevet français n° 2 660 638, on connaît un dispositif de préhension de produits souples et minces, visant à éliminer les inconvénients précités.

Ce dispositif comprend une pince mécanique à laquelle sont associés des moyens aptes à saisir une pièce du lot et à la présenter à la pince.

Dans ce dispositif, les moyens aptes à saisir une pièce du lot ou tas et à la présenter à la pince sont constitués par un tube mobile verticalement dans les deux sens et relié, en temps utile, à une source d'aspiration.

Malheureusement, le recours à une source d'aspiration s'est rapidement révélé inapte à assurer un fonctionnement fiable de ces moyens de préhension, notamment en raison des irrégularités aléatoires et inévitables présentées par les surfaces supérieures des lots de pièces.

La présente invention vise à remédier à tous ces inconvénients. A cet effet, dans le dispositif qu'elle concerne et qui est du type supporté par un chariot mobile au moins verticalement et comportant une pince mécanique et des moyens aptes à saisir une pièce du lot ou tas et à la présenter entre les mâchoires de la pince, ces moyens sont constitués par un organe en forme de vrille, disposé verticalement et animé, d'une part, d'un mouvement descendant entre les mâchoires en position ouverte de la pince depuis une position fin de course haute, située au-dessus des mâchoires de la pince, jusqu'à une position fin de course basse, située au-dessous des mâchoires de la pince, suivi d'un mouvement ascendant de retour en position haute et, d'autre part, d'une rotation dans le sens du vissage, en fin de course descendante, suivie d'une rotation en sens inverse, en fin de course ascendante, simultanément à la fermeture de la pince, tandis que des moyens sont prévus pour commander l'arrêt de la course descendante du chariot supportant le dispositif dès que l'organe en forme de vrille est en contact avec la pièce à saisir et le début de sa course ascendante aussitôt après la fermeture de la pince.

Grâce à la présence de cet organe en forme de vrille et de sa rotation dans le sens du vissage, la saisie de la pièce supérieure du lot ou tas est assurée, car elle n'est plus tributaire d'un état de surface.

Ces moyens de préhension peuvent, par exemple, être utilisés comme pince de présentation dans l'installation précitée de transfert de pièces textiles de grandes dimensions entre un convoyeur de lots de pièces sortant d'une machine à repasser. En effet, dans cette installation, la pince de présentation a pour fonction de saisir une seule pièce parmi un tas de pièces préalablement démêlées par extraction d'un lot convoyé.

Avantageusement, pour que le mouvement de descente du chariot supportant ce dispositif soit automatiquement limité au niveau de son contact avec la pièce supérieure du lot ou tas, un détecteur de présence d'une pièce est associé à l'organe en forme de vrille, ce détecteur étant lui-même associé à un moyen de commande de la rotation, dans le sens du vissage, de l'organe en forme de vrille, à un inverseur de course de cet organe et à un moyen d'arrêt de la course descendante du chariot.

Suivant une autre caractéristique intéressante de l'invention, visant à réduire, le plus possible, toute perte de temps susceptible d'entraver le fonctionnement de l'installation, à la mâchoire fixe de la pince est associé un détecteur de présence apte à interrompre l'écoulement du cycle de fonctionnement de ce dispositif de préhension et à commander la reprise de ce cycle à son origine, dans le cas où aucune pièce n'est détectée dans la pince après sa fermeture.

Naturellement, la pince peut être de tout type approprié, c'est-à-dire à deux mâchoires dont au moins une est pivotante ou encore du type à deux pignons comme dans le dispositif du brevet français précité n° 2 660 638.

De toute façon, l'invention sera bien comprise, à l'aide de la description qui suit, en référence au dessin schématique annexé représentant, à titre d'exemple non limitatif, une forme d'exécution de ce dispositif :
- Figure 1 est une vue de côté en élévation montrant un poste de préhension d'une pièce textile équipé du dispositif selon la présente demande ;
- Figure 2 en est une vue en perspective, montrant ce dispositif en position de repos ;
- Figures 3 et 4 en sont des vues en coupe, suivant III-III de figure 2, le montrant dans ses deux positions extrêmes de saisie d'une pièce textile ;
- Figures 5 à 9 sont des vues très schématiques de côté, en élévation, illustrant le principe de fonctionnement de ce dispositif.

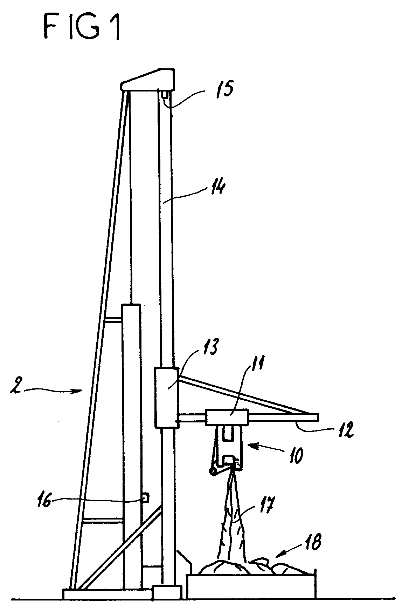

Ce dispositif comprend, essentiellement, un corps 2 sensiblement parallélépipédique rectangle tenu verticalement par un support mobile verticalement dont un exemple décrit plus loin, est visible sur la figure 1.

A l'extrémité inférieure de ce corps 2 sont aménagés, d'une part, une mâchoire fixe 3 orientée verticalement en direction du bas et une chape 4 d'axe horizontal 5 sur lequel est articulée une mâchoire mobile 6 associée à la mâchoire fixe 3 pour constituer une pince de préhension de pièces textiles.

Un vérin 7 dont le corps est articulé sur un axe horizontal 8 porté par le corps 2, au voisinage de son extrémité supérieure et dont l'extrémité libre 7'a de la tige 7a est articulée sur un axe horizontal 9 porté par la mâchoire mobile 6 de manière que la sortie de la tige 7a du vérin 7 commande le pivotement de la mâchoire mobile 6 dans le sens de la flèche 31, autour de son axe 5 et que la rentrée de la tige 7a du vérin 7 dans le corps de ce dernier provoque son pivotement en sens inverse.

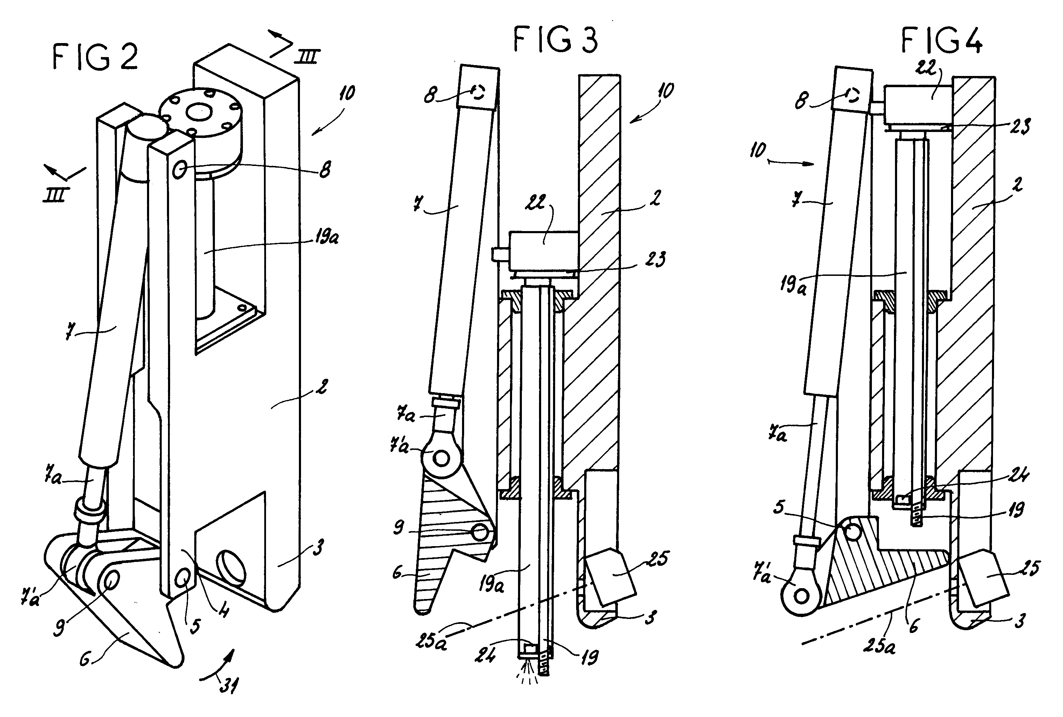

Naturellement, la mâchoire mobile 6 est dimensionnée de manière qu'en position d'ouverture, comme illustré sur la figure 2, elle libère totalement l'intervalle la séparant de la mâchoire fixe 3 et qu'au contraire, en position de fermeture, comme illustré sur la figure 3, elle prenne appui, par son extrémité libre, contre la face interne de la mâchoire fixe 3.

Dans l'exemple illustré sur la figure 1, le dispositif selon l'invention, ici désigné par la référence générale 10, est suspendu à un premier chariot 11 monté coulissant sur une glissière horizontale 12 elle-même portée, latéralement, par un second chariot 13 lui-même monté coulissant le long d'un mât ou glissière verticale 14.

Un capteur de présence 15 est prévu à l'extrémité supérieure du mât 14 pour commander l'arrêt de la course ascendante du chariot 13 lorsque celui-ci arrive à proximité du sommet du mât 15.

Au voisinage de l'extrémité inférieure du mât 14 est prévu un second capteur 16 destiné à contrôler la présence d'une pièce 17 lorsque le chariot 13 a atteint un niveau prédéterminé au-dessus du capteur 16 après le début de sa course ascendante.

Dans ce dispositif, selon l'invention, les moyens aptes à saisir une pièce 17 parmi celles situées en tas ou en lots 18 au-dessous de lui sont constitués par un organe en forme de vrille 19, disposé verticalement, suivant un axe 21 passant entre les mâchoires 3 et 6 de la pince. Cet organe en forme de vrille 19 est susceptible d'être animé d'un mouvement de translation verticale alternatif ainsi que d'un mouvement de rotation dans un sens ou dans l'autre. A cet effet, il est porté par un coulisseau 22 mobile verticalement le long du corps 2 du dispositif, ce coulisseau supportant l'organe 19 par l'intermédiaire d'un moteur 23 apte à entraîner l'organe 19 en rotation dans un sens ou dans l'autre. Les mouvements de translation et de rotation de l'organe 19 sont commandés par des détecteurs de position non représentés sur le dessin.

Comme le montre le dessin, et plus particulièrement la figure 3, le guide support 19a de l'organe en forme de vrille 19 supporte, du côté de l'extrémité libre de l'organe en forme de vrille 19, un détecteur 24 de présence d'une pièce à saisir. Ce détecteur 24 a pour mission de commander, dès qu'il détecte la présence d'une pièce 17 à saisir, d'une part, I'arrêt de la course descendante du chariot 13 qui supporte le dispositif 10 et, d'autre part et successivement, la mise en rotation, dans le sens du vissage, de l'organe en forme de vrille 19 et sa course ascendante.

Enfin, comme le montre également plus particulièrement les figures 3 et 4, la mâchoire fixe 3 de la pince porte un détecteur de présence 25, de préférence de type optique, apte à détecter l'absence d'une pièce 17, après mise en position de fermeture de la mâchoire mobile 6, par suite de la non intersection du faisceau 25a qu'elle émet, par une pièce textile.

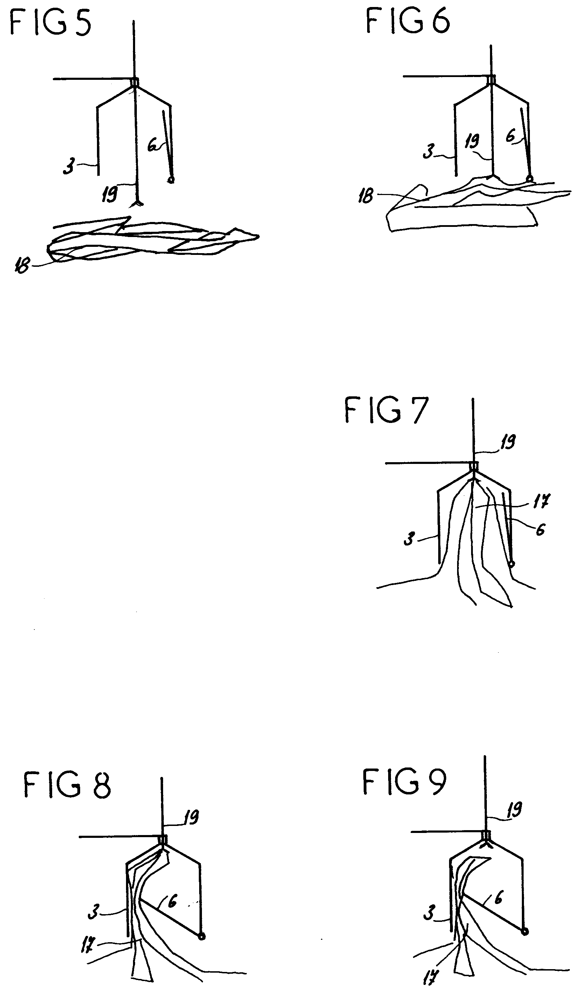

Le fonctionnement de ce dispositif, tel qu'illustré par les figures 5 à 9 est le suivant :
le chariot 13 étant en position fin de course haute ou, tout au moins, n'ayant pas encore atteint sa position basse de préhension d'une pièce 17, l'organe 19 en forme de vrille est déplacé verticalement en position fin de course basse comme illustré sur les figures 3 et 5, position dans laquelle son extrémité inférieure libre ainsi que le détecteur 24 qui lui est associé, sont situés en dessous des mâchoires 3 et 6 de la pince. Dès que le détecteur 24 constate le présence d'une pièce à saisir, comme illustré sur la figure 6, il commande, simultanément, I'arrêt de la course descendante du chariot 13, la mise en rotation, dans le sens du vissage, de l'organe en forme de vrille 19. Aussitôt après, l'organe en forme de vrille 19 est déplacé verticalement jusque dans sa position fin de course haute comme illustré sur la figure 7. Durant cette course ascendante, il est censé entraîner avec lui la pièce 17 à saisir. Dès que l'organe 19 arrive en fin de course haute, la mâchoire mobile 6 de la pince est pivotée jusque dans sa position de fermeture comme illustré sur les figures 4 et 8. Dès cet instant, l'organe en forme de vrille 19 est entraîné en rotation à son origine, c'est-à-dire dans le sens du dévissage, de manière à libérer totalement la pièce saisie 17 qui n'est retenue, dans le dispositif, que par le serrage de la pince constitué par les mâchoires 3 et 6.

Simultanément au serrage des mâchoires 3 et 6 de la pince, le chariot 13 est entraîné verticalement jusqu'à sa fin de course haute pour présenter la pièce saisie 17 à l'organe de l'installation qui doit le prendre en charge.

Naturellement, comme indiqué précédemment, lorsque l'organe en forme de vrille 19 a atteint sa position fin de course haute comme illustré sur les figures 4 et 7, que ce soit avant ou après mise en position de fermeture de la mâchoire mobile 6 de la pince, si aucune pièce saisie 17 n'intersecte le faisceau 25a émis par le détecteur 25, le cycle de fonctionnement du dispositif est interrompu et reprend à son origine, c'est-à-dire que la mâchoire mobile 6 de la pince est à nouveau pivotée dans sa position ouverte comme illustré sur la figure 3 en même temps que l'organe en forme de vrille 19 est déplacé verticalement jusque dans sa position fin de course basse telle qu'illustrée sur les figures 3 et 5, tandis que la course descendante du chariot 13 est reprise jusqu'à ce que le détecteur 24, associé à l'organe en forme de vrille 19, décèle la présence d'une pièce à saisir au contact de l'extrémité libre de l'organe en forme de vrille 19.

Ce dispositif présente donc, par rapport à ceux connus antérieurement, l'avantage d'être très fiable puisque non tributaire de l'état de surface du tas de pièces ni de la contexture de ces dernières.

## Revendications

1. Dispositif pour la préhension d'une pièce mince et souple, telle qu'une pièce textile, comme un drap, son extraction hors d'un lot ou tas de telles pièces et sa dépose ultérieure du type supporté par un chariot (13), mobile au moins verticalement et comportant une pince mécanique (3, 6) et des moyens aptes à saisir une pièce (17) du lot ou tas et à la présenter entre les mâchoires (3, 6) de la pince, **caractérisé en ce que** ces moyens sont constitués par un organe en forme de vrille (19), disposé verticalement et animé, d'une part, d'un mouvement descendant entre les mâchoires (3, 6) en position ouverte de la pince depuis une position fin de course haute, située au-dessus des mâchoires (3, 6) de la pince, jusqu'à une position fin de course basse, située au-dessous des mâchoires de la pince, suivi d'un mouvement ascendant de retour en position haute et, d'autre part, d'une rotation dans le sens du vissage, en fin de course descendante, suivie d'une rotation en sens inverse, en fin de course ascendante, simultanément à la fermeture de la pince, tandis que des moyens (24) sont prévus pour commander l'arrêt de la course descendante du chariot (13) supportant le dispositif (10) dès que l'organe en forme de vrille (19) est en contact avec la pièce (17) à saisir et le début de sa course ascendante, aussitôt après la fermeture de la pince.

2. Dispositif selon la revendication 1, **caractérisé en ce qu**'un détecteur (24) de présence d'une pièce (17) est associé à l'organe en forme de vrille (19), ce détecteur étant lui-même associé à un moyen de commande de la rotation, dans le sens du vissage, de l'organe en forme de vrille (19), à un inverseur de course de cet organe (19) et à un moyen de commande de l'arrêt de la course descendante du chariot (13).

3. Dispositif selon la revendication 1 ou la revendication 2, **caractérisé en** **ce qu**'à la mâchoire fixe (3) de la pince est associé un détecteur de présence (25) apte à interrompre l'écoulement du cycle de fonctionnement de ce dispositif de préhension (10) et à commander la reprise de ce cycle à son origine, dans le cas où aucune pièce (17) n'est détectée dans la pince (3, 6) après sa fermeture.
